# EUROPÄISCHE PATENTSCHRIFT

(11) **EP 0 760 745 B1**
(45) Veröffentlichungstag und Bekanntmachung des Hinweises auf die Patenterteilung: **14.10.1998**
(21) Anmeldenummer: 95919328.5
(22) Anmeldetag: 19.05.1995
(51) Int. Cl.: B32B 25/04, B65G 15/34, B32B 33/00

(54) **VERBUNDSCHICHTKÖRPER, INSBESONDERE FÖRDERGURT**
LAMINATED COMPOSITE BODY, IN PARTICULAR CONVEYOR BELT
CORPS STRATIFIE COMPOSITE, NOTAMMENT BANDE TRANSPORTEUSE

(30) Priorität: 27.05.1994 DE 4418590
(43) Veröffentlichungstag der Anmeldung: 12.03.1997
(73) Patentinhaber: ContiTech Transportbandsysteme GmbH, 30165 Hannover (DE)
(72) Erfinder: SCHWAMBACH, Dana, D-50735 Köln (DE); BENDER, Hans, Uwe, D-63584 Gründau (DE); KOCH, Hans, Joachim, D-53332 Bornheim (DE)
(74) Vertreter: Lins, Edgar, Dipl.-Phys. Dr.jur.
(86) Internationale Anmeldenummer: DE9500686
(87) Internationale Veröffentlichungsnummer: WO9532861

(56) Entgegenhaltungen:
- EP-A- 0 051 750
- EP-A- 0 142 716
- US-A- 4 734 314
- US-A- 4 981 737
- DATABASE WPI, Woche 8435, Derwent Publications Ltd., London (GB); AN 84-215620

## Beschreibung

Die Erfindung betrifft einen Verbundschichtkörper, insbesondere Fördergut, bestehend aus einem, eine mechanische Stabilität des Verbundschichtkörpers im wesentlichen bestimmenden Träger und wenigstens einer Deckplatte aus Gummi, thermoplastischem Elastomer und/oder Kunststoffen, die einen hohen Widerstand gegen mechanische Beschädigungen in Form von Herben, Schnitten o. dgl. aufweist.

Ein besonders bedeutsames Beispiel eines erfindungsgemäßen Verbundschichtkörpers ist ein Fördergurt.

Der Fördergurt als wesentlicher Bestandteil von Gurtförderanlagen hat im wesentlichen zwei Aufgaben zu erfüllen. Die eine besteht darin, eine Gurtzugkraft zu übertragen, um im Gurt zwischen den Antriebstrommeln ausreichende Normalkräfte aufzubauen, die zur Übertragung der Antriebskraft mittels der Reibung auf dem Gurt geeignet sind. Die Zugkraft zur Überwindung des Bewegungswiderstandes wird von den im Gurt befindlichen mechanischen Verstärkungsanordnungen aufgenommen. Der Fördergurt soll ferner Fördergut transportieren. Das Fördergut wird regelmäßig auf den Fördergurt aufgeworfen, und zwar aus einer Höhe von bis zu 10 m. Da das Fördergut auch scharfkantiges Gestein o.ä. sein kann, muß der Fördergurt so ausgelegt sein, daß der Aufprall des Fördergutes auf dem Fördergurt zu keiner Beschädigung des Gurtes führt. Hierzu ist der Fördergurt mit einer Deckplatte versehen, die insbesondere die Aufgabe hat, die mechanische Verstärkungsanordnung in der als Träger dienenden Zugträgerschicht vor Beschädigungen zu schützen, da derartige Beschädigungen die Funktionsfähigkeit des Gurtes beeinträchtigen bzw. aufheben. Für die Verstärkungsanordnung sind Stahlseilanordnungen oder Anordnungen aus mehreren Gewebelagen üblich.

Die Deckplatte eines Fördergurtes erleidet im Betrieb durch das stetige Aufprasseln der Schüttgutteilchen eine Narbung der Oberschicht, ggfs. unter Ausbildung kleinerer Kerben. Die Kerben oder Narben können Ausgangsort für Einschlitzungen oder Haarrisse sein, die sich in Abhängigkeit von den Betriebsbedingungen (Gurtgeschwindigkeit, Muldung des Fördergurtes, Abstand der Antriebsrollen), vom Fördergut und von den Gurteigenschaften aufgrund der ständig wechselnden Spannungszustände und -konzentrationen an der Rißspitze fortpflanzen. Hierdurch kann es zu Durchschlägen bis zur Zugträgerschicht kommen, wodurch die Funktionsfähigkeit des Fördergurtes in Frage gestellt wird. Daher wird in der Praxis ein über längerer Zeit dem Schüttgut ausgesetzter Fördergurt erneuert, wenn die Oberfläche der Deckplatte durch die stetigen Aufschläge des Schüttgutes zahlreiche Narben und Kerben aufweist.

Eine bekannte Maßnahme zur Erhöhung der Standzeit besteht in der Vergrößerung der Deckplattendicke. Hierdurch wird die für den Durchschlag notwendige Energie erhöht. Es kann jedoch nicht verhindert werden, daß Kerben und Schnitte auch durch die größere Deckplattendicke hindurch zum Durchschlag führen. Der mit dem erhöhten Materialaufwand erzielte Effekt ist daher begrenzt.

Eine weitere bekannte Maßnahme zur Erhöhung der Lebensdauer besteht in der Einbringung von Querarmierungen aus textilen oder metallischen Materialien. Diese müssen eine gute Verbindung zum Gummi aufweisen und die geforderten Muldungseigenschaften des Fördergurtes möglich machen. Die Aufgabe der Querarmierung besteht darin, hohe Energieeinträge des Fallgutes abzufangen, indem sie selbst Kräfte aufnimmt, die Spannungen verteilt und somit ein direktes Durchschlagen auf die Zugträgerschicht unterbindet. Sie verhindert vor allem solche Längsschnitte, die zum Aufspleißen von Stahlseilen führen können. Die Gefahr des Entstehens von Kerben und Einschnitten kann damit jedoch nicht beseitigt werden.

Es ist ferner bekannt, zur Erhöhung der Lebensdauer von Gurtdeckplatten Fasern in den Deckplattenwerkstoff einzubringen. Damit keine unterschiedlichen Eigenschaften der Deckplatte in Längs- und Querrichtung entstehen, muß die Faserverteilung unorientiert sein. Durch die übliche Verarbeitung (Kalandrierung) der Deckplatte ergibt sich jedoch eine Vorzugsrichtung der Fasern, die es nicht ermöglicht, ein geschlossenes Fasernetzwerk aufzubauen. Daher ist auch die Einbringung von Fasern in die Deckplatte nur bedingt nützlich.

Ein anderes Beispiel für einen eingangs erwähnten Verbundschichtkörper ist eine Walze mit einer auf einen metallischen Kern aufgebrachten Deckschicht die durch körniges und scharfkantiges Walzgut ähnlichen Belastungen ausgesetzt ist wie die Deckschicht eines Fördergurts.

Ein als Fördergurt ausgebildeter Verbundschichtkörper der eingangs erwähnten Art ist durch die DE-OS 17 50 410 bekannt. Dabei sind mehrere zugaufnehmende Schichten vorgesehen, wobei die die zugaufnehmenden Schichten nach außen abschließenden Deckplatten einschichtig aufgebaut sind.

Durch EP 0 431 907 A2 ist eine mit Gummi beschichtete Walze bekannt, auf deren Metallkern zwei Gummischichten aufgebracht sind, wobei die beiden Gummischichten aus dem im wesentlichen gleichen Basismaterial gebildet sind und die äußere Gummischicht lediglich einen die Abriebfestigkeit erhöhenden Zusatz, beispielsweise in Form eines Zinksalzes, aufweist.

Durch die DE 33 42 560 A1 ist eine mehrlagige Dachdichtungsbahn bekannt, bei der ein an sich vorteilhafter EPDM-Kautschuk mit einer Glasfaserverstärkung versehen ist, nach außen jedoch durch eine die übliche Verlegung der Dachdichtungsbahn begünstigende SEBS-Kautschukschicht abgedeckt ist. Der mehrlagige Aufbau ergibt sich daher aus der üblichen Verlegetechnik für Dachdichtungsbahnen und ist nicht zur Erhöhung des Widerstandes gegen mechanische Beschädigungen in Form von Kerben, Schnitten o. dgl. vorgesehen.

Ähnliches gilt für den erosionsfesten und korrosionsfesten Schutzüberzug, der in DE 92 07 785 U1 offenbart ist. Dieser besitzt eine äußere Verschleißschicht mit einer Shore-A-Härte von 45 bis 75, eine darunterliegende Weichgummischicht mit einer Shore-A-Härte von 45 bis 55, eine Stützschicht und eine vierte Schicht aus Weichgummi mit einer Shore-A-Härte vo 45 bis 75. Die Stützschicht besteht aus einer Stahlschicht, einer Gewebeschicht oder aus einer Hartgummischicht mit einer Shore-D-Härte von etwa 70 bis 80. Die entsprechende Beschichtung soll eine hohe Widerstandsfähigkeit gegen chemisch aggressive Materialien aufweisen, die einen Einsatz in Rauchgasentschwefelungsanlagen ermöglichen. Eine Erhöhung der Widerstandsfähigkeit gegen mechanische Beschädigungen in Form von Kerben, Schnitten o. dgl. ist weder angestrebt noch offenbart.

Das der Erfindung zugrundeliegende Problem besteht darin, die Deckplatte eines Verbundschichtkörpers der eingangs erwähnten Art so zu verbessern, daß höhere Standzeiten gegenüber mechanischen Beschädigungen in Form von Kerben, Schnitten o. dgl. möglich werden.

Zur Lösung dieses Problems ist der Verbundschichtkörper der eingangs erwähnten Art erfindungsgemäß dadurch gekennzeichnet, daß die Deckplatte aus wenigstens zwei Schichten mit unterschiedlichen Eigenschaften gebildet ist, die miteinander verbunden sind und eine deutliche, eine Rißfortpflanzung behindernde Phasengrenze zwischen sich bilden, indem die äußere erste Schicht der Deckplatte eine um wenigstens 10 % höhere Härte als eine innen an die erste Deckschicht angrenzende zweite Schicht der Deckplatte aufweist, wobei die Härte der ersten Schicht zwischen 50 und 80 und der zweiten Schicht zwischen 35 und 60 Shore A liegt, und wobei die sich an die erste Schicht anschließende zweite Schicht eine größer als 55 % betragende und wenigstens um 10 % höhere Elastizität als die erste Schicht aufweist.

Die die Schutzfunktion ausübende Deckplatte des erfindungsgemäßen Verbundschichtkörpers ist mehrlagig ausgebildet wobei durch die Ausbildung der mehreren Lagen mit den unterschiedlichen Härte- und Elastizitätseigenschaften eine deutliche Phasengrenze in den Verbund entsteht. Dadurch wird bei Ausbildung eines Risses in der äußeren Schicht der Deckplatte die Rißfortpflanzung an der Phasengrenze gestoppt oder zumindest gehemmt. Bei gleicher Dicke der Deckplatte kann daher durch den mehrschichtigen Aufbau mit den erfindungsgemäß ausgebildeten Schichten eine deutlich verbesserte Schutzfunktion mit der Deckplatte erzielt werden.

In einer bevorzugten Ausführungsform besteht die Deckplatte aus drei Schichten mit zwei deutlichen Phasengrenzen.

Das Material der Deckplatte ist - wie bisher - vorzugsweise ein Gummiwerkstoff auf der Basis von Natur- und/oder Synthesekautschuken.

Die erste, äußere Schicht der Deckplatte weist vorzugsweise wenigstens 30 % der Dicke der Deckplatte auf, wenn die Gesamtdicke der Deckplatte beispielsweise 15 bis 20 mm beträgt. Ist die Gesamtdicke deutlich kleiner, sollte die äußerste Schicht eine größere relative Dicke bis zu 50 % aufweisen. Die erste Schicht wird zweckmäßigerweise mit der größten Härte ausgeführt und dient als "Panzerschicht".

Die zweite Schicht ist gegenüber der ersten Schicht elastischer ausgebildet, um über eine Rißspitze oder eine Kerbe eingeleitete Energie elastisch, d.h. ohne Materialzerstörung, aufnehmen zu können.

Die Härte der ersten Schicht sollte vorzugsweise 65 bis 72 Shore A und die Härte der zweiten Schicht vorzugsweise 50 und 57 Shore A betragen.

Die erste und die zweite Schicht sollten eine Festigkeit von größer als 20 MPa und vorzugsweise größer 25 MPa und eine Dehnung von größer 400 %, vorzugsweise größer 500 % aufweisen.

Ein wesentlicher Parameter für die erste Schicht ist eine hohe Abriebsfestigkeit. Der Abrieb - gemessen nach DIN - sollte kleiner 120 mm³, vorzugsweise kleiner 100 mm^{3,} betragen.

Die für die zweite Schicht wesentliche Elastizität sollte vorzugsweise größer 60 % sein.

Die Rißeinleitung und -fortpflanzung in der Deckplatte kann dadurch reduziert werden, daß wenigstens die erste Schicht mit aktivem Füllstoff, z.B. Ruß oder Kieselsäure, gefüllt ist.

Die erste Schicht ist vorzugsweise mit einem schwefelarm oder schwefelfrei vernetzten System gebildet.

Zu den die Phasengrenze hervorrufenden Unterschieden zwischen der ersten und der zweiten Schicht kann auch die Vernetzung mit unterschiedlichen Systemen gehören.

Vorzugsweise ist eine innere dritte Schicht vorhanden, die sich nach innen an die zweite Schicht anschließt und eine Härte von 55 bis 70 Shore A, vorzugsweise 60 bis 65 Shore A aufweist, die zwischen den Härten der ersten und der zweiten Schicht liegt.

Die Erfindung wird im folgenden anhand von in der Zeichnung dargestellten Ausführungsbeispielen näher erläutert. Es zeigen:
- Figur 1: einen Schnitt durch einen Stahlseil-Fördergurt
- Figur 2: einen Schnitt durch einen Mehrlagen-Gummi-Fördergurt
- Figur 3: einen Schnitt durch einen Deckplattenaufbau mit drei Schichten
- Figur 4: einen Schnitt durch einen Walzenaufbau.

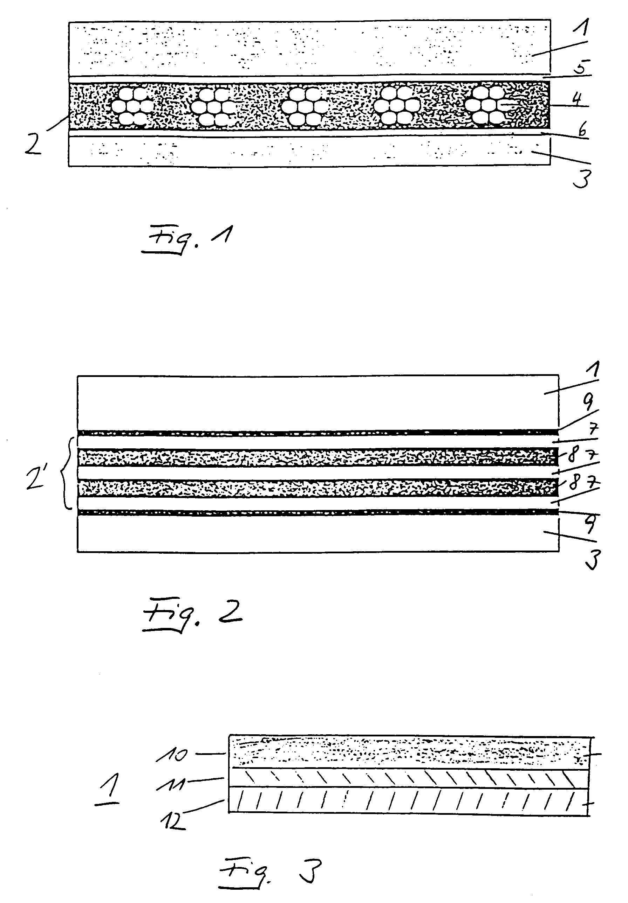

Gemäß Figur 1 besteht ein Stahlseilgurt aus einer äußeren, d.h. tragseitigen, Deckplatte 1, einer Zugträgerschicht 2 und einer laufseitigen Deckplatte 3.

Die Zuträgerschicht 2 weist als mechanische Verstärkungsanordnung verdrillte Stahlseile 4 auf, die in einem die Zugträgerschicht 2 bildenden Gummimaterial eingebettet sind.

Zwischen der Zugträgerschicht 2 und den Deckplatten 1, 3 können Querarmierungen 5, 6 eingebracht sein.

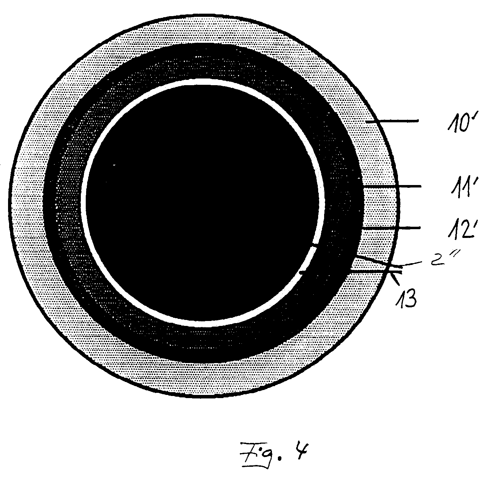

Figur 2 zeigt eine Zugträgerschicht 2', deren mechanische Verstärkungsanordnung aus drei Gewebelagen 7 besteht. Zwischen den Gewebelagen befinden sich Bindungsschichten 8 aus einem Gummiwerkstoff, basierend auf Natur- oder Synthesekautschuk. Die Verbindung zu den Deckplatten 1, 3 erfolgt durch auf die jeweils benachbarten Gewebelagen 7 aufgebrachte Haftschichten 9.

Figur 3 verdeutlicht, daß die Deckplatten 1 erfindungsgemäß aus mehreren Schichten bestehen. In dem in Figur 3 dargestellten Ausführungsbeispiel schließt sich an eine äußere erste Schicht 10, die die Funktion einer Panzerschicht ausübt, eine hochelastische zweite Schicht 11 und eine dritte Schicht 12 an, die als Schutzschicht ggfs. mit einer Querarmierung versehen sein kann.

Alle drei Schichten 10, 11, 12 sind aus Gummiwerkstoffen oder thermoplastischen Elasten gebildet. Die erste Schicht 10 weist die größte Härte, die zweite Schicht 11 die geringste Härte, jedoch die höchste Elastizität und die dritte Schicht 12 eine mittlere Härte auf.

Zwischen den Schichten 10, 11, 12 sind deutliche Phasengrenzen ausgebildet, die eine Rißfortpflanzung zumindest hemmen.

Als weiteres Verwendungsbeispiel für einen erfindungsgemäßen Verbundschichtkörper zeigt Figur 4 eine Walze, bestehend aus einem Metallkern als Träger 2'', auf den über eine Bindeschicht 13 von innen nach außen eine dritte Schicht 12', eine zweite Schicht 11' und eine erste, äußere Schicht 10' aufgebracht sind, die die gleichen Merkmale wie die Schichten 10, 11, 12 der oben beschriebenen Fördergurte aufweisen.

## Patentansprüche

1. Verbundschichtkörper, insbesondere Fördergurt, bestehend aus einem eine mechanische Stabilität des Verbundschichtkörpers im wesentlichen bestimmenden Träger (2, 2', 2'') und wenigstens einer Deckplatte (1) aus Gummi, thermoplastischem Elastomer (TPE) und/oder Kunststoffen, die einen hohen Widerstand gegen mechanische Beschädigungen in Form von Kerben, Schnitten o. dgl. aufweist, **dadurch gekennzeichnet, daß** die Deckplatte (1) aus wenigstens zwei Schichten (10, 11, 12) mit unterschiedlichen Eigenschaften gebildet ist, die miteinander verbunden sind und eine deutliche, eine Rißfortpflanzung behindernde Phasengrenze zwischen sich bilden, indem die äußere erste Schicht (10, 10') der Deckplatte (1) eine um wenigstens 10 % höhere Härte als eine innen an die erste Deckschicht (10, 10') angrenzende zweite Schicht (11, 11') der Deckplatte (1) aufweist, wobei die Härte der ersten Schicht (10, 10') zwischen 50 und 80 und der zweiten Schicht (11, 11') zwischen 35 und 60 Shore A liegt, und wobei die sich an die erste Schicht (10, 10') anschließende zweite Schicht (11, 11') eine größer als 55 % betragende und wenigstens um 10 % höhere Elastizität als die erste Schicht (10, 10') aufweist.

2. Verbundschichtkörper nach Anspruch 1, dadurch gekennzeichnet, daß die Deckplatte (1) aus drei Schichten (10, 11, 12) mit zwei deutlichen Phasengrenzen besteht.

3. Verbundschichtkörper nach Anspruch 1 oder 2, dadurch gekennzeichnet, daß die äußere erste Schicht (10) der Deckplatte (1) 30 bis 50 % der Dicke der Deckplatte (1) aufweist.

4. Verbundschichtkörper nach Anspruch 1, 2 oder 3, gekennzeichnet durch eine Härte der ersten Schicht (10) zwischen 65 und 72 Shore A.

5. Verbundschichtkörper nach einem der Ansprüche 1 bis 4, gekennzeichnet durch eine Härte der zweiten Schicht (11) zwischen 50 und 57 Shore A.

6. Verbundschichtkörper nach einem der Ansprüche 1 bis 5, dadurch gekennzeichnet, daß die erste und die zweite Schicht (10, 11) eine Festigkeit von größer 20 MPa und eine Dehnung von größer 400 % aufweisen.

7. Verbundschichtkörper nach Anspruch 6, dadurch gekennzeichnet, daß die erste und die zweite Schicht (10, 11) eine Festigkeit von größer 25 MPa und eine Dehnung von größer 500 % aufweisen.

8. Verbundschichtkörper nach einem der Ansprüche 1 bis 7, dadurch gekennzeichnet, daß die erste Schicht (10) einen Abrieb von kleiner 120 mm³ aufweist.

9. Verbundschichtkörper nach Anspruch 8, dadurch gekennzeichnet, daß die erste Schicht einen Abrieb von kleiner 100 mm³ aufweist.

10. Verbundschichtkörper nach einem der Ansprüche 1 bis 9, dadurch gekennzeichnet, daß die zweite Schicht (11) eine Elastizität von größer 60 % aufweist.

11. Verbundschichtkörper nach einem der Ansprüche 1 bis 10, dadurch gekennzeichnet, daß die erste und die zweite Schicht (10, 11) aus einem Gummiwerkstoff auf der Basis von Natur- und/oder Synthesekautschuk besteht.

12. Verbundschichtkörper nach einem der Ansprüche 1 bis 10, dadurch gekennzeichnet, daß wenigstens die erste Schicht (10) mit einem aktiven Füllstoff gefüllt ist.

13. Verbundschichtkörper nach einem der Ansprüche 1 bis 12, dadurch gekennzeichnet, daß die erste Schicht (10) mit einem schwefelarm oder schwefelfrei vernetzten System gebildet ist.

14. Verbundschichtkörper nach einem der Ansprüche 1 bis 13, dadurch gekennzeichnet, daß die erste Schicht (10) und die zweite Schicht (11) mit unterschiedlichen Systemen vernetzt sind.

15. Verbundschichtkörper nach einem der Ansprüche 2 bis 14, dadurch gekennzeichnet, daß die sich an die zweite Schicht (11) nach innen anschließende dritte Schicht (12) eine Härte von 55 bis 70 Shore A aufweist.

16. Verbundschichtkörper nach Anspruch 15, gekennzeichnet durch eine Härte der dritten Schicht (12) zwischen 60 und 65 Shore A.

17. Verbundschichtkörper nach Anspruch 15 oder 16, gekennzeichnet durch eine Ausbildung der dritten Schicht mit einem hohen Weiterreißwiderstand.

18. Verbundschichtkörper nach einem der Ansprüche 2 bis 17, gekennzeichnet durch eine Querarmierung in der dritten Schicht (12).

## Claims

1. A laminated composite body, especially a conveyor belt, comprising a support (2, 2', 2'') substantially determining the mechanical stability of the laminated composite body and at least one cover (1) of vulcanised rubber, thermoplastic elastomer (TPE) and/or plastics, which exhibit a high level of resistance to mechanical damage in the form of nicks, cuts or the like, characterised in that the cover (1) is formed of at least two plies (10, 11, 12) with different properties, which plies (10, 11, 12) are connected together and form between them a clear phase boundary which prevents tear propagation, the first, outer ply (10, 10') of the cover (1) being at least 10 % harder than a second ply (11, 11') of the cover (1) adjoining the inside of the first cover ply (10, 10'), wherein the Shore A hardness of the first ply (10, 10') lies between 50 and 80 and that of the second ply (11, 11') between 35 and 60 and wherein the second ply (11, 11') adjoining the first ply (10, 10') exhibits an elasticity greater than 55 % and at least 10 % higher than that of the first ply (10, 10').

2. A laminated composite body according to claim 1, characterised in that the cover (1) consists of three plies (10, 11, 12) with two clear phase boundaries.

3. A laminated composite body according to claim 1 or claim 2, characterised in that the first, outer ply (10) of the cover (1) constitutes 30 to 50 % of the thickness of the cover (1).

4. A laminated composite body according to claim 1, claim 2 or claim 3, characterised in that the first ply (10) exhibits a Shore A hardness of between 65 and 72.

5. A laminated composite body according to one of claims 1 to 4, characterised in that the second ply (11) exhibits a Shore A hardness of between 50 and 57.

6. A laminated composite body according to one of claims 1 to 5, characterised in that the first and second plies (10, 11) exhibit a strength greater than 20 MPa and elongation greater than 400 %.

7. A laminated composite body according to claim 6, characterised in that the first and second plies (10, 11) exhibit a strength greater than 25 MPa and elongation greater than 500 %.

8. A laminated composite body according to one of claims 1 to 7, characterised in that the first ply (10) exhibits abrasion of less than 120 mm³.

9. A laminated composite body according to claim 8, characterised in that the first ply exhibits abrasion of less than 100 mm³.

10. A laminated composite body according to one of claims 1 to 9, characterised in that the second ply (11) exhibits an elasticity of greater than 60 %.

11. A laminated composite body according to one of claims 1 to 10, characterised in that the first and second plies (10, 11) consist of a vulcanised rubber material based on natural and/or synthetic rubber.

12. A laminated composite body according to one of claims 1 to 10, characterised in that at least the first ply (10) is filled with an active filler.

13. A laminated composite body according to one of claims 1 to 12, characterised in that the first ply (10) is formed with a system vulcanised with little or no sulphur.

14. A laminated composite body according to one of claims 1 to 13, characterized in that the first ply (10) and the second ply (11) are vulcanised with different systems.

15. A laminated composite body according to one of claims 2 to 14, characterised in that the third ply (12) adjoining the second ply (11) on the inside exhibits a Shore A hardness of from 55 to 70.

16. A laminated composite body according to claim 15, characterised in that the third ply (12) exhibits a Shore A hardness of between 60 and 65.

17. A laminated composite body according to claim 15 or claim 16, characterized by construction of the third ply with a high level of resistance to tear propagation.

18. A laminated composite body according to one of claims 2 to 17, characterized by a transverse reinforcement in the third ply (12).

## Revendications

1. Corps stratifié composite, notamment courroie transporteuse, constitué d'un support (2, 2', 2'') déterminant pour l'essentiel une stabilité mécanique du corps stratifié composite, et d'au moins une plaque de couverture (1) en caoutchouc, élastomère thermoplastique (ETP) et/ou matières plastiques, qui présente une grande résistance à l'égard des endommagements mécaniques sous forme d'encoches, d'entailles ou analogues, caractérisé en ce que la plaque de couverture (1) est constituée d'au moins deux couches (10, 11, 12) ayant des propriétés différentes, qui sont reliées l'une à l'autre et constituent entre elles une limite de phases nette, faisant obstacle à la propagation des déchirures, par le fait que la première couche, extérieure, (10, 10') de la plaque de couverture (1) présente une dureté d'au moins 10 % plus grande qu'une seconde couche (11, 11') de la plaque de couverture (1) attenant intérieurement à la première couche de couverture (10, 10'), la dureté de la première couche (10, 10') étant comprise entre 50 et 80 Shore A, celle de la seconde couche (11, 11') entre 35 et 60 Shore A, et la seconde couche (11, 11') se raccordant à la première couche (10, 10') présente une élasticité supérieure à 55 % et au moins 10 % plus grande que la première couche (10, 10').

2. Corps stratifié composite selon la revendication 1, caractérisé en ce que la plaque de couverture est constituée de trois couches (10, 11, 12) avec deux limites de phases nettes.

3. Corps stratifié composite selon la revendication 1 ou 2, caractérisé en ce que la première couche, extérieure, (10) de la plaque couverture (1) présente 30 à 50 % de l'épaisseur de la plaque de couverture (1).

4. Corps stratifié composite selon la revendication 1, 2 ou 3, caractérisé par une dureté de la première couche (10) comprise entre 65 et 72 Shore A.

5. Corps stratifié composite selon l'une des revendications 1 à 4, caractérisé par une dureté de la deuxième couche (11) comprise entre 50 et 57 Shore A.

6. Corps stratifié composite selon l'une des revendications 1 à 5, caractérisé en ce que la première et la deuxième couche (10, 11) présentent une résistance supérieure à 20 MPa et un allongement supérieur à 400 %.

7. Corps stratifié composite selon la revendication 6, caractérisé en ce que la première et la deuxième couche (10, 11) présentent une résistance supérieure à 25 MPa et un allongement supérieur à 500 %.

8. Corps stratifié composite selon l'une des revendications 1 à 7, caractérisé en ce que la première couche (10) présente une abrasion inférieure à 120 mm³.

9. Corps stratifié composite selon la revendication 8, caractérisé en ce que la première couche présente une abrasion inférieure à 100 mm³.

10. Corps stratifié composite selon l'une des revendications 1 à 9, caractérisé en ce que la deuxième couche (11) présente une élasticité supérieure à 60 %.

11. Corps stratifié composite selon l'une des revendications 1 à 10, caractérisé en ce que la première et la deuxième couche (10, 11) est constituée d'une matière caoutchouteuse à base de caoutchouc naturel et/ou synthétique.

12. Corps stratifié composite selon l'une des revendications 1 à 10, caractérisé en ce qu'au moins la première couche est chargée avec une charge active.

13. Corps stratifié composite selon l'une des revendications 1 à 12, caractérisé en ce que la première couche est constituée d'un système réticulé pauvre en soufre ou exempt de soufre.

14. Corps stratifié composite selon l'une des revendications 1 à 13, caractérisé en ce que la première couche (10) et la seconde couche (10) sont réticulées avec des systèmes différents.

15. Corps stratifié composite selon l'une des revendications 2 à 14, caractérisé en ce que la troisième couche (12) se raccordant vers l'intérieur à la deuxième couche (11), présente une dureté comprise entre 55 et 70 Shore A.

16. Corps stratifié composite selon la revendication 15, caractérisé par une dureté de la troisième couche (12) comprise entre 60 et 65 Shore A.

17. Corps stratifié composite selon la revendication 15 ou 16, caractérisé par une constitution de la troisième couche avec une grande résistance à la continuation du déchirement.

18. Corps stratifié composite selon l'une des revendications 2 à 17, caractérisé par une armature transversale dans la troisième couche (12).
